# EUROPÄISCHE PATENTSCHRIFT

(11) **EP 1 734 793 B1**
(45) Veröffentlichungstag und Bekanntmachung des Hinweises auf die Patenterteilung: **16.04.2008**
(21) Anmeldenummer: 05012736.4
(22) Anmeldetag: 14.06.2005
(51) Int. Cl.: H05B 33/08

(54) **Verfahren zum Betreiben eines organischen lichtemittierenden Bauteils und organisches lichtemittierendes Bauteil**
Method and device for operating an OLED device
Méthode et appareil pour alimenter un dispositif OLED

(43) Veröffentlichungstag der Anmeldung: 20.12.2006
(73) Patentinhaber: Novaled AG, 01307 Dresden (DE)
(72) Erfinder: Burghart, Markus, 01099 Dresden (DE); Birnstock, Jan, Dr., 01187 Dresden (DE); Murano, Sven, Dr., 01127 Dresden (DE)
(74) Vertreter: Bittner, Thomas L.

(56) Entgegenhaltungen:
- EP-A- 0 625 843
- EP-A- 1 227 466
- WO-A-03/069958
- WO-A-20/04059606
- DE-A1- 19 732 828
- GB-A- 2 388 236
- US-A- 5 736 881
- US-A1- 2003 184 505
- US-B1- 6 501 230

## Beschreibung

Die Erfindung betrifft ein Verfahren zum Betreiben eines organischen lichtemittierenden Bauteils, insbesondere organische Leuchtdiode (OLED), und ein organisches lichtemittierendes Bauteil.

### Stand der Technik

Organische Leuchtdioden haben in den vergangenen Jahren verstärkte Aufmerksamkeit gewonnen. Hierzu gehören auch organische Leuchtdioden, die Weißlicht emittieren. Es ist allgemein anerkannt, dass diese Technologie ein großes Potential für mögliche Anwendungen im Bereich der Beleuchtungstechnik besitzt. Mittlerweile erreichen organische Leuchtdioden Leistungsefizienzen, welche im Bereich von konventionellen elektrischen Glühbirnen liegen (Forrest et al., Adv. Mater, 7, 624 (2004)), weitere Verbesserungen sind zu erwarten. Somit haben Weißlicht emittierende OLEDs das Potential, eine Alternative zu den momentan den Markt dominierenden Beleuchtungstechnologien zu bilden, beispielsweise Glühlampen, Halogenlampen, Niederspannungsleuchtstoffröhren oder dergleichen.

Für einen technologischen Durchbruch von weißen OLEDs auf dem Beleuchtungsmarkt sind jedoch noch technische Verbesserungen notwendig. Zu den Herausforderungen, die heute noch nicht befriedigend gelöst wurden, gehört die Realisierung von hocheffizienten, weißen OLEDs mit einer langen Lebensdauer. Beleuchtungstechnologien, die dem momentanen Stand der Technik entsprechen, verfügen über eine Betriebslebensdauer von einigen hundert bis einigen zehntausend Stunden. Während Lebensdauern in dieser Größenordnung für monochrome OLEDs, insbesondere für rote OLEDs, bereits demonstriert werden konnten, ist dies für weiße OLEDs nicht der Fall.

Organische Leuchtdioden, welche eine Emission von Weißlicht mittels einer geeigneten Anordnung mehrerer organischer Bereiche realisieren, die Licht unterschiedlicher Farbe emittieren, sind hinsichtlich ihrer Lebensdauer durch die Lebensdauer der einzelnen Emittersysteme beschränkt. Sofern eine der individuellen Farbkomponenten gegenüber den anderen Farbanteilen relativ an Intensität verliert, verschiebt sich das gesamte Emissionsspektrum in Richtung der anderen Komponenten, wodurch der Gesamteindruck einer "weißen" Emission vezlorcngeht Somit ist die Lebensdauer einer Weißlicht emittierenden OLED durch die Lebensdauer der individuellen Komponenten begrenzt. Da die Lebensdauern der Grundfarben innerhalb von organischen lichtemittierenden Bauelementen Unterschiede aufweisen, wobei insbesondere blaue Emittersysteme, welche für eine Weißlichtemission zwingend benötigt werden, kurze Lebensdauern zeigen, ist eine unterschiedliche Alterung der Farbkomponenten weißer OLEDs ein technisches Problem.

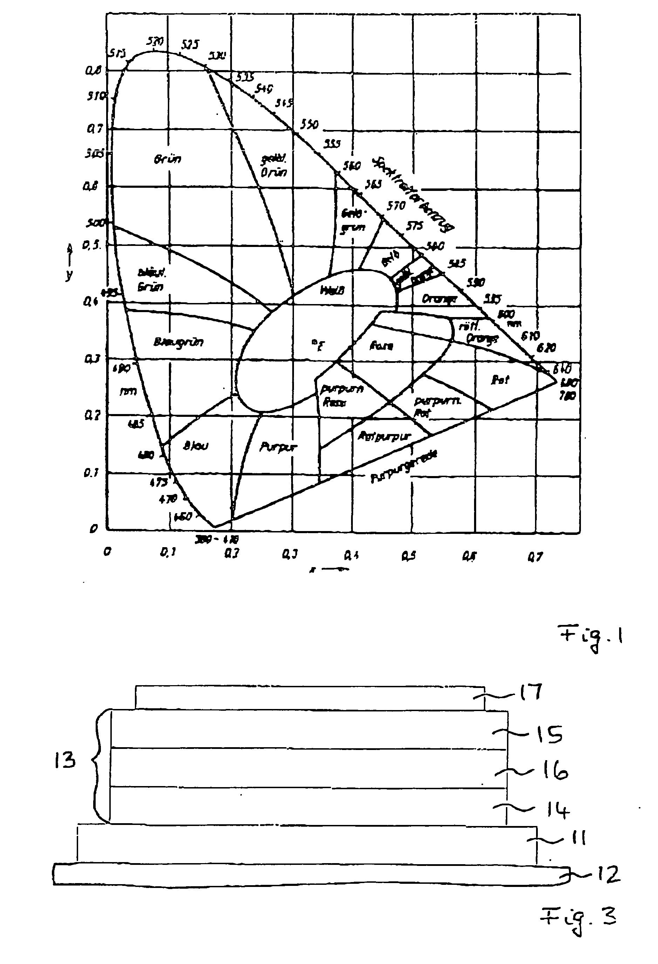

Fig. 1 zeigt das CIE-Farbdiagramm, in dem die unterschiedlichen Farbbereiche markiert sind. Der weiße Bereich des CIE-Farbdiagramms befindet sich in der Mitte in der Umgebung des Punktes E, welcher den Farbkoordinaten von Sonnenlicht entspricht.

Organische Leuchtdioden zeichnen sich gewöhnlicherweise durch ein spannungsabhängiges Emissionsspektrum aus, was zur Folge hat, dass die CIE-Farbkoordinaten der Lichtemission eine Funktion der Helligkeit der Diode darstellen. Dieses Verhalten ist insbesondere dann ausgeprägt, wenn mehrere Emittersysteme in der OLED enthalten sind, beispielsweise in Weißlicht emittierenden Dioden. Zwar kann ein solches Verhalten gegebenenfalls erwünscht sein, trotzdem ist es erstrebenswert, wenn sich die Abhängigkeit von Emissionslage und Helligkeit gegebenenfalls entkoppeln lassen würde. Somit würde es ermöglicht, eine Diode bei gleicher Helligkeit mit unterschiedlichen CIE-Farbkoordinaten zu betreiben oder aber mit gleichen Farbkoordinaten unterschiedliche Helligkeiten zu erzielen.

Die unterschiedliche Alterung der organischen Materialien, welche Licht unterschiedlicher Farben emittieren, kommt insbesondere dadurch zum Ausdruck, dass die blauen Emittersysteme eine eher kurze Lebensdauer im Vergleich zu den grünen und roten Emittersystemen aufweisen. Aufgrund der unterschiedlichen Alterung wird die gesamte Lebensdauer der weißen OLED limitiert, da ein abnehmender Blauanteil zu einer Farbverschiebung der Emission aus dem weißen Bereich in Richtung grün und / oder rot fübrt.

Darüber hinaus kann es sein, dass in einer weißen OLED, welche auf Emission von einem fluoreszenten blauen Emitter sowie einem phosphoreszenten grünen und roten Emitters beruht, die Lebensdauer des grünen Phosphoreszenzemitters limitierend für die Gesamtlebensdauer wirkt.

In dem Dokument EP 1 227 466 A2 ist ein Licht emittierendes Bauteil offenbart, bei dem in einem organischen Schichtbereich ein einzelnes Emittermaterial angeordnet ist, so daß das Licht emittierende Bauteil einfarbiges Licht emittiert. Mit Hilfe mehrerer einfarbiger Licht emittierender Bauteile wird ein Farbdisplay gebildet. Insbesondere umfaßt das Farbdisplay organische Licht emittierende Dioden, die rotes, grünes und blaues Licht abgeben. Beim Betrieb der einfarbigen organischen Licht emittierenden Dioden wird ein Betriebsparameter erfaßt, insbesondere die Treiberspannung. Um einen Treiberstrom für die jeweilige Licht emittierende Dioden beim Betrieb konstant zu halten, wird die Treiberspannung korrigiert. Auf diese Weise wird für die einzelne Licht emittierende Diode eine Helligkeitsänderung aufgrund der Alterung der Diode korrigiert. Die Korrektur wird für die einfarbigen Licht emittierenden Dioden jeweils individuell durchgerührt. Mit Hilfe dieser individuellen Helligkeitskorrekturen wird erreicht, daß die relativen Lichtanteile der einzelnen einfarbigen Dioden in dem Farbdisplay im wesentlichen konstant gehalten werden, wodurch die farbliche Erscheinung des Farbdisplays aufrechterhalten werden kann.

Das Dokument GB 2 388 236 A beschreibt ein Display sowie Treiberschaltungen für elektrooptische Displays. Mittels Impulsbreitenmodulation wird die Helligkeit von organischen Leuchtdioden reguliert.

Das Dokument US 6,501,230 B1 betrifft eine farbige Flachbildanzeige, bei der organische Leuchtdioden verwendet werden. Es ist eine Schaltung zur Alterungskorrektur vorgesehen. Mit Hilfe der Regelung der Stromeigenschaften wird Helligkeitsänderungen infolge von Alterungsprozessen der organischen Licht emittierenden Leuchtdiode entgegengewirkt.

### Die Erfindung

Der Erfindung liegt die Aufgabe zugrunde, ein Verfahren zum Betreiben eines organischen lichtemittierenden Bauteils und ein organisches lichtemittierendes Bauteil anzugeben, bei denen über die Lebensdauer des organischen lichtemittierenden Bauteils eine Farbstabilität des emittierten Lichtes gewährleistet ist.

Diese Aufgabe wird erfindungsgemäß durch ein Verfahren zum Betreiben eines organischen lichtemittierenden Bauteils nach dem unabhängigen Anspruch 1 und ein organisches lichtemittierendes Bauteil nach dem unabhängigen Anspruch 9 gelöst. Vorteilhafte Ausgestaltungen der Erfindung sind Gegenstand von abhängigen Unteransprüchen.

Nach einem Aspekt der Erfindung ist ein Verfahren zum Betreiben eines organischen lichtemittierenden Bauteils, insbesondere organische lichtemittierende Diode (OLED), mit einer organischen Schicht, welche mehrere unterschiedliche Emittermaterialien umfasst, die Licht unterschiedlicher Farben emittieren, so daß von der organischen Schicht Licht mit einer Mischfarbe emittiert wird, und einer Elektrodenanordnung zum Anlegen von elektrischen Steuerimpulsen an die organische Schicht geschaffen, wobei das Verfahren die folgenden Schritte aufweist:
- Betreiben des organischen lichtemittierenden Bauteils mit Hilfe der elektrischen Steuerimpulse in einer gepulsten Betriebsart mit einer Betriebsfrequenz von wenigstens etwa 25Hz;
- zumindest teilweises Kompensieren einer alterungsbedingt variierenden Farbänderung des von der organischen Schicht emittierten Lichtes mit der Mischfarbe im Verlauf des gepulsten Betriebes, indem mindestens ein Betriebsparameter erfaßt wird, der den laufenden gepulsten Betrieb des organischen lichtemittierenden Bauteils charakterisiert und für den eine Abhängigkeitsbeziehung zu der alterungsbedingt variierenden Farbänderung zumindest näherungsweise bekannt ist, und indem eine Impulshöhe der elektrischen Steuerimpulse dem mindestens einen erfassten Betriebsparameter und der zumindest näherungsweise bekannten Abhängigkeitsbeziehung zwischen dem mindestens einen Betriebsparameter und der alterungsbedingt variierenden Farbänderung entsprechend eingestellt wird; und
- Regeln einer vorgegebenen Helligkeit des von der organischen Schicht emittierten Lichtes mit der Mischfarbe im Verlauf des gepulsten Betriebes, indem eine Impulslänge der elektrischen Steuerimpulse eingestellt wird, um die vorgegebene Helligkeit des von der organischen Schicht emittierten Lichtes mit der Mischfarbe zu regeln.

Nach einem weiteren Aspekt der Erfindung ist ein organisches lichtemittierendes Bauteil, insbesondere organische lichtemittierende Diode (OLED), geschaffen mit:
- einer organischen Schicht mit mehreren unterschiedlichen Emittermaterialien, die Licht unterschiedlicher Farben emittieren, so daß Licht mit einer Mischfarbe von der organischen Schicht emittiert wird;
- einer Elektrodenanordnung, die mit der organische Schicht elektrisch verbunden ist, um die organische Schicht mit elektrischer Energie zu beaufschlagen;
- einer Ansteuerschaltung, die mit der Elektrodenanordnung verbunden ist, um elektrische Steuerimpulse mit einer Betriebsfrequenz von wenigstens etwa 25Hz anzulegen;
- einer an die Ansteuerschaltung gekoppelten Regeleinrichtung, mit der eine Impulshöhe der elektrischen Steuerimpulse einstellbar ist, um eine vorgegebene Mischfarbe des von der organischen Schicht emittierten Lichtes zu regeln; und
- einer an die Ansteuerschaltung gekoppelten weiteren Regeleinrichtung, mit der eine Impulslänge der elektrischen Steuerimpulse einstellbar ist, um eine vorgegebene Helligkeit des von der organischen Schicht emittierten Lichtes mit der Mischfarbe zu regeln.

Die Alterung von lichtemittierenden organischen Systemen wird üblicherweise mittels der Dauer beschrieben, innerhalb welcher das organische lichtemittierende Bauteil bei einer gegebenen anfänglichen Betriebshelligkeit und bei einem konstanten Betriebsstrom die halbe ursprüngliche Helligkeit erreicht, die so genannte Halbwertszeit. Mit der Erfindung ist die Möglichkeit geschaffen, ein organisches lichtemittierendes Bauteil mit spannungsabhängig variablen Farbkoordinaten des emittierten Lichtes so zu betreiben, dass eine Entkopplung der Steuerung von Helligkeit und Farbkoordinate des emittierten Lichtes erreicht ist. Dies hat zur Folge, dass das organische lichtemittierende Bauteil bei einer bestimmten Helligkeit in der emittierten Farbkoordinate durchstimmbar ist, oder dass das organische lichtemittierende Bauteil bei einer bestimmten Farbkoordinate hinsichtlich seiner Helligkeit durchgestimmt werden kann. Alterungsbedingte Farbänderungen des emittierten Lichtes können so ausgeglichen werden.

Eine gepulste Ansteuerung über Spannungs- oder Stromimpulse ermöglicht eine gezielte Einstellung von sowohl der Farbkoordinate des emittierten Lichtes als auch gleichzeitig der Helligkeit des organischen lichtemittierenden Bauteils. Eine solche Regelung ermöglicht eine Kompensation der differentiellen Farbalterung eines spannungsabhängig betreibbaren organischen lichtemittierenden Bauteils.

Durch die vorliegende Erfindung wird es ermöglicht, ein organisches lichtemittierendes Bauelement so zu betreiben, dass eine individuelle Einstellung von emittierter Lichtfarbe und Helligkeit möglich ist. Eine solche Steuerbarkeit ist besonders für organische Leuchtdioden in Beleuchtungsanwendungen, beispielsweise als Raumbeleuchtung oder als Hintergrundbcleuchtung in Anzeigen wünschenswert. Mit einer solchen gezielten Einstellung der emittierten Farbe des Lichtes kann die Farbkoordinate des emittierten Lichtes individuell den Wünschen des Nutzers angepasst werden. Hierdurch ist insbesondere bei Weißlicht emittierenden organischen Bauteilen auch die Farbtemperatur regelbar.

Bei dem organischen lichtemittierenden Bauteil kann vorgesehen sein, daß die Regeleinrichtung zum Einstellen der Impulshöhe der elektrischen Steuerimpulse und die weitere Regeleinrichtung zum Einstellen der zeitlichen Impulslänge der elektrischen Steuerimpulse jeweils mit einem manuellen Bedienelement versehen sind, so daß die Einstellung der Impulshöhe / Impulslänge per Hand für die beiden Kenngrößen unabhängig voneinander erfolgen kann. Alternativ oder ergänzend kann eine Kompensationseinrichtung mit Erfassungsmitteln zum Erfassen mindestens eines Betriebsparameters vorgesehen sein, der den laufenden gepulsten Betrieb des organischen lichtemittierenden Bauteils charakterisiert und für den eine Abhängigkeitsbeziehung zu einer alterungsbedingt variierenden Farbänderung zumindest näherungsweise bekannt ist. Bei dieser Ausführungsform ist weiterhin eine an die Regeleinrichtung und die weitere Regeleinrichtung gekoppelte Steuereinrichtung vorgesehen, mit der die Impulshöhe der elektrischen Impulse dem mindestens einen erfaßten Betriebsparameter und der zumindest näherungsweise bekannten Abhängigkeitsbeziehung zwischen den mindestens einen Betriebsparameter und der alterungsbedingt variierenden Farbänderung entsprechend einstellbar ist. Auf diese Weise ist eine automatische Regelung für die Impulshöhe der elektrischen Steuerimpulse geschaffen.

In einem gepulsten Betrieb eines organischen lichtemittierenden Bauteils ergibt sich die Helligkeit des emittierten Lichtes aus einer Mittelung der Intensität während eines Vorwärtsimpulses (Das organische lichtemittierende Bauteil ist "an".) und der Intensität während eines Rückwärtsimpulses (Das organische lichtemittierende Bauteil ist "aus".), was auch als Nullspannungsphase bezeichnet wird. Somit lässt sich mittels Verlängerung der zeitlichen Länge des Vorwärtsimpulses bei gleichbleibender Periodendauer die Helligkeit erhöhen. Die Farbe des emittierten Lichtes bingegen wird mittels des Stroms während des Steuerimpulses, nämlich der Impulshöhe variiert. Zur Entkopplung der Zusammenhänge zwischen Helligkeit und Farbe des emittierten Lichtes können die Impulslänge und die Impulshöhe der angelegten Steuerimpulse moduliert werden. Eine geeignete Einstellung der Impulshöhe ermöglicht die Regelung der Emissionsfarbe, während die Impulslänge die Helligkeit bestimmt. Hierdurch wird sowohl die Regelung der Helligkeit als auch die Regelung des Emissionsspektrums individuell möglich.

Die Impulsfrequenz kann hierbei weitgehend frei gewählt werden, allerdings ist es sinnvoll, diese so abzustimmen, dass der Betrachter den Eindruck eines kontinuierlichen Betriebes des organischen lichtemittierenden Bauteils gewinnt. Dies ist insbesondere bei hohen Frequenzen der Fall. Die höchstmöglichen Frequenzen sind durch die Kapazität des organischen lichtemittierenden Bauteils begrenzt, die mit der Fläche des organischen lichtemittierenden Bauteils wächst. Im allgemeinen sind OLEDs sind sehr schnelle Bauelemente, deren Anschaltverzögerung im Bereich einiger Nanosekunden liegt.

Bei Verwendung von organischen Emittersystemen, die Licht unterschiedlicher Farben emittieren, wird es bei einer Fortbildung der Erfindung ermöglicht, gezielt eine Farbkomponente des emittierten Lichtes während des Betriebs nachzuregeln, welche die kürzeste Lebensdauer der unterschiedlichen Emittersystem aufweist. Eine solche Nachregelung ist insbesondere für den Blauanteil eines organischen Weißlicht emittierenden Bauteils sinnvoll, da die Lebensdauern blauer organischer Emittersysteme üblicherweise kürzer sind als die anderer zur Weißlichterzeugung beitragender Emittersysteme. Um nun die differentielle Alterung eines Weißlicht emittierenden Bauteils zu reduzieren, wird bei einer Abnahme des Blauanteils der Lichtemission dieser mittels einer gezielten Erhöhung des Impulses nachgeregelt, während die Gesamthelligkeit des organischen lichtemittierenden Bauteils mittels einer gleichzeitigen Verkürzung der Impulslänge konstant gehalten werden kann. Hierdurch ist es ermöglicht, die Gesamtbetriebslebensdauer unter Erhaltung der Weißlichtemission signifikant zu verlängern.

Insbesondere erlaubt es eine solche Regelung auch, einer differentiellen Farbalterung der einzelnen Farbkomponenten des organischen lichtemittierenden Bauteils entgegenzuwirken. Eine solche unterschiedliche Alterung ist besonders bei Weißlicht emittierenden OLEDs bekannt, da hier üblicherweise bei dem organischen Emittersystem für blaues Licht zuerst eine Verminderung der Strom- oder der Quanteneffizienz auftritt. Dies hat in OLEDs mit einer Mischung unterschiedlicher Farbsysteme zur Folge, dass das Spektrum des emittierten Lichtes bei einer gegebenen Helligkeit und bei fortschreitendem Betrieb verstärkt in seinem Blauanteil verarmt und somit die Farbkoordinaten in Richtung zu einer grün-roten Emission verschoben werden. Um einer solchen Alterung entgegenzuwirken, wird während des gepulsten Betriebes der OLED die Emissionslage kontinuierlich in dem Maße in den blauen Bereich verschoben, wie normalerweise die Abnahme des blauen Anteils über der Betriebszeit erfolgt. Hierdurch wird die Emissionslage, nämlich die Farbkoordinaten der Emission insgesamt stabil gehalten.

### Ausführungsbeispiele der Erfindung

Die Erfindung wird im folgenden anhand von Ausfuhrungsbeispielen unter Bezugnahme auf Figuren der Zeichnung näher erläutert. Hierbei zeigen:
- Fig. 1: ein CIE-Farbdiagramm;
- Fig. 2: eine schematische Darstellung einer Anordnung mit einem organischen lichtemittierenden Bauteil und einer zugehörigen Beschaltung zum Betreiben des organischen lichtemittierenden Bauteils im gepulsten Betrieb;
- Fig. 3: eine schematische Darstellung eines Schichtaufbaus für ein organisches lichtemittierendes Bauteil;
- Fig. 4: eine schematische Darstellung mit elektrischen Steuerimpulsen in Form von Spannungsimpulsen mit gleicher Impulsdauer aber unterschiedlichen Impulshöhen;
- Fig. 5: eine schematische Darstellung mit elektrischen Steuerimpulsen in Form von Stromimpulsen mit unterschiedlichen Impulshöhen und gleicher Impulsdauer;
- Fig. 6: eine schematische Darstellung mit zwei Spannungsimpulsen mit gleicher Impulslänge sowie gleicher Impulshöhe im positiven Spannungsbereich;
- Fig. 7: eine schematische Darstellung mit zwei Spannungsimpulsen mit unterschiedlicher Impulslänge sowie gleicher Impulshöhe;
- Fig. 8: eine schematische Darstellung mit zwei Stromimpulsen mit unterschiedlicher Impulslänge sowie gleicher Impulshöhe;
- Fig. 9: eine schematische Darstellung mehrerer Impulsformen für die elektrischen Steuerimpulse; und
- Fig. 10: eine grafische Darstellung von gemessenen CIE-Farbkoordinaten für ein organisches lichtemittierendes Bauteil in Abhängigkeit von der Alterung und einer anschließenden Korrektur der Impulshöhe der angelegten Steuerimpulse.

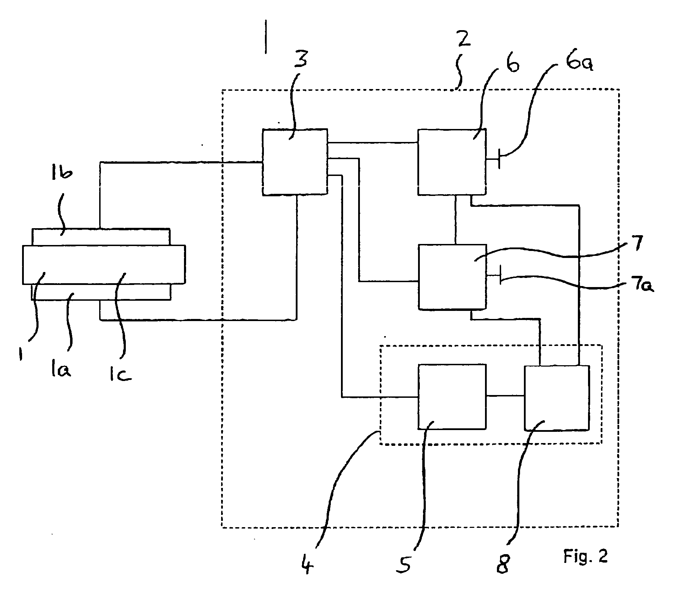

Fig. 2 zeigt eine schematische Darstellung einer Anordnung eines organischen lichtemittierenden Bauteils 1 mit einer zugehörigen Beschaltung 2 zum Betreiben des organischen lichtemittierenden Bauteils 1 in einer gepulsten Betriebsart. Elektroden 1a, 1b, die zum Anlegen von elektrischen Steuerimpulsen an einen zwischen den beiden Elektroden 1a, 1b angeordneten organischen Bereich 1c dienen, sind mit einer Ansteuerschaltung 3 verbunden. Über die Ansteuerschaltung 3 werden elektrische Steuerimpulse auf das organische lichtemittierende Bauteil 1 gegeben, um Emittermaterialien in dem organischen Bereich 1c anzuregen, so daß diese Licht emittieren. In dem organischen Bereich 1c sind mehrere unterschiedliche Emittermaterialien angeordnet, die jeweils Licht unterschiedlicher Farbe emittieren. Auf diese Weise weist das von dem organischen Bereich 1c emittierte Licht eine Mischfarbe auf, wobei es sich insbesondere um Weißlicht handeln kann.

Mit Hilfe der Beschaltung 2 wird das organische lichtemittierende Bauteil 1 mit elektrischen Steuerimpulsen beaufschlagt, deren Impulshöhe und Impulslänge unabhängig voneinander einstellbar sind. Für eine Einstellung dieser Kenngrößen der elektrischen Steuerimpulse per Hand sind bei einer Regeleinrichtung 6 zum Einstellen der Impulshöhe und einer weiteren Regeleinrichtung 7 zum Einstellen der Impulslänge manuelle Bedienelemente 6a, 7a, beispielsweise in Form von Tast- oder Drehschaltern, vorgesehen. Auf diese Weise ist es möglich, eine alterungsbedingt variierende Farbänderung des von dem organischen Bereich 1c emittierten Lichtes mit der Mischfarbe zumindest teilweise zu kompensieren.

In Ergänzung zu den manuellen Bedienelementen 6a, 7a, oder in einer anderen Ausführung (nicht dargestellt) alternativ hierzu ist eine automatische Regelung vorgesehen. Zu diesem Zweck sind gemäß Fig. 2 eine Kompensationseinrichtung 4 mit Erfassungsmitteln 5 und einer Steuereinrichtung 8 gebildet. Mit Hilfe der Erfassungsmittel 5 kann zumindest ein Betriebsparameter gemessen werden, der den laufenden gepulsten Betrieb des organischen lichtemittierenden Bauteils 1 charakterisiert und für den eine Abhängigkeitsbeziehung zu der alterungsbedingt variierenden Farbänderung zumindest näherungsweise bekannt ist. Beispielsweise kann für eines der Emittermaterialien in dem organischen Bereich 1c bekannt sein, daß dessen Emissionsvermögen mit zunehmender Betriebsdauer abnimmt. Mit den Erfassungsmitteln 5 wird die Betriebsdauer gemessen. Mit Hilfe der Steuereinrichtung 8 wird dann über die Regeleinrichtung 6 die Impulshöhe der elektrischen Steuerimpulse dem mindestens einen erfaßten Betriebsparameter, nämlich der Betriebsdauer, und der wenigstens näherungsweise bekannten Abhängigkeitsbeziehung zwischen dem Betriebsparameter und der alterunsbedingt variierenden Farbänderung entsprechend geregelt. Auf diese Weise kann der von einem der Emittermaterialien in dem organischen Bereich 1c geleistete Beitrag zum Licht der Mischfarbe wieder erhöht werden, wenn dieser aufgrund der Alterung nachgelassen hat. Beispielsweise wird die Impulshöhe der elektrischen Steuerimpulse erhöht, um den Lichtbeitrag des alternden Emittermaterials im Vergleich zu den anderen Emittermaterialien in dem organischen Bereich 1c wieder anzugleichen.

Die Abhängigkeitsbeziehung zwischen dem gemessenen Betriebsparameter, also beispielsweise der Betriebsdauer oder einer optischen Farbanalyse des emittierten Lichtes, und der alterungsbedingt variierenden Farbänderung des emittierten Lichtes kann vorher bekannt sein, zum Beispiels aus Kalibriermessungen an vergleichbaren Bauteilen, oder während des laufenden gepulsten Betriebes ermittelt werden.

Unabhängig von der Regelung der Impulshöhe wird mit der weiteren Regeleinrichtung 7 die Länge der elektrischen Steuerimpulse eingestellt, was per Hand oder automatisch mittels der Steuereinrichtung 8 erfolgt. Die Regelung der zeitlichen Impulslänge wirkt sich hierbei im wesentlichen auf die Helligkeit des von dem organischen Bereich 1c emittierten Lichtes aus.

Aufgrund der unabhängigen Regelung der Impulshöhe und der Impulslänge ist es mit der Beschaltung 2 ermöglicht, daß von dem organischen lichtemittierenden Bauteil 1 emittierte Licht mit der Mischfarbe in einem vorgegebenen Farbbereich und gleichzeitig in einem vorbestimmten Helligkeitsbereich zu halten. Insbesondere können Helligkeitsänderungen, die infolge einer Nachregelung der Impulshöhe zur Kompensation der alterungsbedingt variierenden Farbänderung entstehen, mittels nachträglicher oder gleichzeitiger Änderung der zeitlichen Impulslänge ausgeglichen werden.

Fig. 3 zeigt eine schematische Darstellung eines beispielhaften Schichtaufbaus für das organische lichtemittierende Bauteil 1 in Fig. 2 im Detail. Auf einer Elektrode 11, welche auf einem Substrat 12 gebildet ist, ist eine Schichtstruktur 13 aus organischen Materialien mittels geeigneter schichtbildender Verfahren aufgebracht. Gemäß Fig. 3 sind zwei Ladungsträgertransportschichten 14, 15 gebildet, zwischen welchen sich eine Emissionsschicht 16 befindet. Abschließend ist auf dem Stapel eine weitere Elektrode 17 aufgebracht. Mindestens eine der beiden Elektroden11, 17 ist transparent, um den Austritt von Licht zu gewährleisten, welches in der Emissionsschicht 16 erzeugt wird. Darüber hinaus sind die Ladungsträgertransporuichichten 14, 15 üblicherweise für den Transport einer Sorte von Ladungsträgern, also Löcher oder Elektronen, optimiert, so dass eine bevorzugt Löcher leitende Ladungsträgertransportschicht an die Anode anschließt und eine bevorzugt Elektronen leitende Ladungsträgertransportschicht an die Kathode.

Fig. 3 zeigt beispielhaft eine Struktur für eine OLED. Die im folgenden näher erläuterten Prinzipien der Erfindung sind jedoch nicht auf die Struktur nach Fig. 3 beschränkt. Insbesondere können eine größere Anzahl von Schichten zum Einsatz kommen, beispielsweise in Form von mehreren Emissionsschichten oder von zusätzlichen Schichten zum Blocken von Ladungsträgern oder Exzitonen an der Grenzfläche zwischen Ladungsträgertransportschichten und Emissionszone oder in Form von Ladungsträgerinjektionsschichten zwischen Ladungsträgertransportscluchten und den Elektroden oder zwischen Ladungsträgertransportschichten und der Emissionszone. Darüber hinaus sind aber auch OLED-Strukturen mit nur einer oder zwei organischen Schichten bekannt, insbesondere im Bereich der Polymer-OLEDs, auch bei solchen OLEDs ist die Erfindung anwendbar.

Darüber hinaus kann die Erfindung auch für lichtemittierende organische Bauteile verwendet werden, in welchen mehrere OLED-Einheiten übereinander gestapelt werden, sofern diese nicht separat an eine Versorgungsspannung angeschlossen sind.

Es ist eine gepulste Ansteuerung des lichtemittierenden organischen Bauteils vorgesehen, mit der eine Entkopplung von Helligkeit und Farbkoordinate des emittierten Lichtes erreicht wird. Hierfür wird ausgenutzt, dass bei OLEDs üblicherweise eine Abhängigkeit der Emissionsfarbe von der Versorgungsspannung auftritt. Dies ist insbesondere bei OLEDs der Fall, welche eine Emission über ein breiteres Spektrum zeigen, insbesondere bei OLEDs, welche eine Emission im weißen Spektralbereich des CIE-Farbdiagramms zeigen (vgl. Fig. 1). Diese Abhängigkeit der Emissionsfarbe von der Versorgungsspannung wird gezielt ausgenutzt. Um nun eine Entkoppelung von Helligkeit und Farbort der Emission zu erzielen, ist eine Ansteuerung mit einer gepulsten Versorgungsspannung vorgesehen.

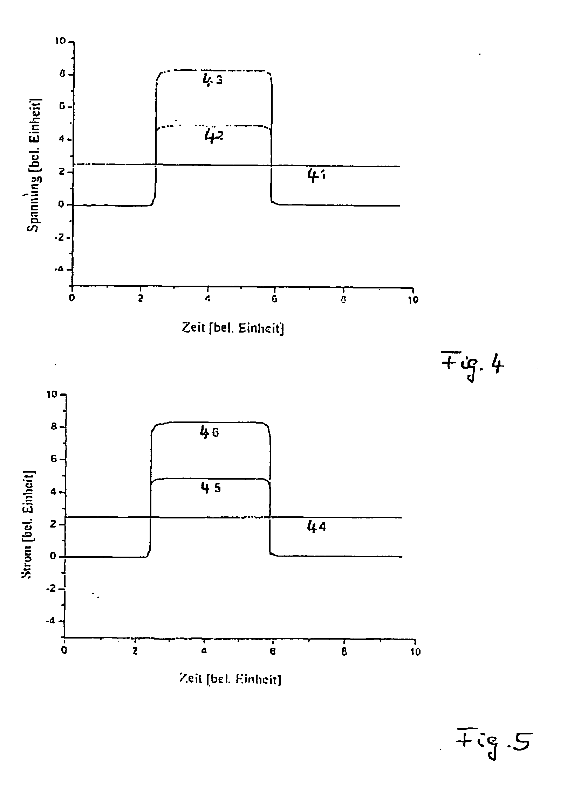

Fig. 4 zeigt eine schematische Darstellung mit elektrischen Steuerimpulsen in Form von Spannungsimpulsen 42, 43 mit gleicher Impulsdauer aber unterschiedlichen Impulshöhen. Darüber hinaus ist eine Gleichspannung 41 gezeigt.

Fig. 5 zeigt eine schematische Darstellung mit elektrischen Steuerimpulsen in Form von Stromimpulsen 45, 46 mit unterschiedlichen Impulshöhen und gleicher Impulsdauer. Darüber hinaus ist ein Gleichstrom 44 zum Vergleich dargestellt. Die unterschiedlichen Impulshöhen führen beim Anlegen an den organischen Bereich mit den unterschiedlichen Emittermaterialien (vgl. Fig. 2 und 3) zu unterschiedlichen Emissionsfarben, da für einen höheren Strom auch eine entsprechend höhere Versorgungsspannung notwendig ist; weiterhin sind die Helligkeitswerte für das emittierte Licht bei unterschiedlicher Höhe der Stromimpulse verschieden.

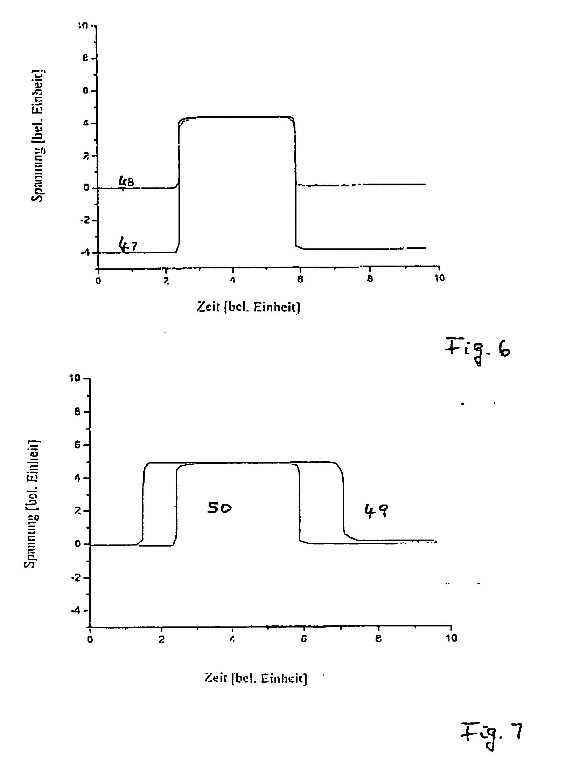

Fig. 6 zeigt zwei Spannungsimpulse 47, 48 mit gleicher Impulslänge sowie gleicher Impulshöhe im positiven Spannungsbereich, allerdings unterscheidet sich der Spannungsitnpuls 47 von dem Spannungsimpuls 48, derart, dass hier im ausgeschalteten Zustand des Bauteils, was bedeutet, dass keine positive Spannung angelegt ist, eine negative Spannung angelegt wird.

Bei der entkoppelten Regelung von Farbe und Helligkeit des emittierten Lichtes wird in einer bevorzugten Betriebsart zunächst tiber die Impulshöhe eine gewünschte Farbe des emittierten Lichtes eingestellt. Danach wird mittels Variation der Impulslänge die Helligkeit geregelt. Fig. 7 zeigt eine solche Regelung am Beispiel von zwei Spannungsimpulsen 49, 50, wobei der Spannungsimpuls 50 aufgrund der geringeren Impulslänge zu einer geringeren Gesamthelligkeit des emittierten Lichtes führt, wohingegen die Farbe des emittierten Lichtes mit der Mischfarbe aufgrund der identischen Impulshöhe gleich ist.

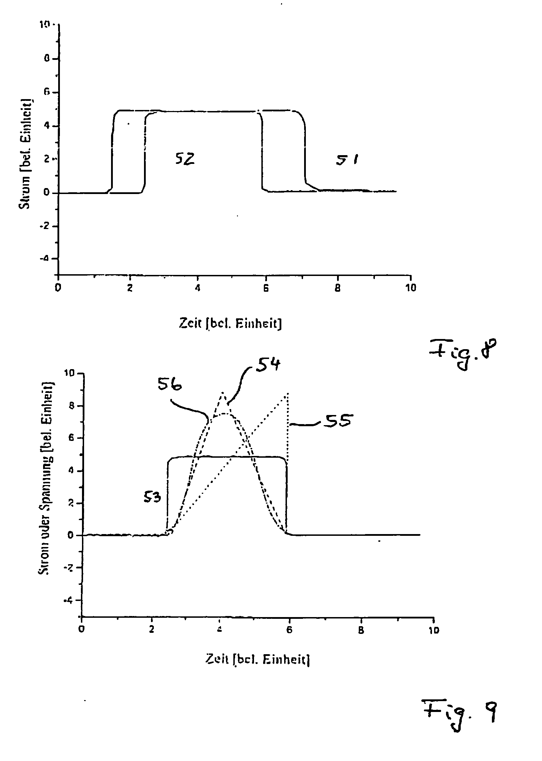

Fig. 8 zeigt eine analoge Entkoppelung von Helligkeits- und Farbregelung für das emittierte Licht für zwei Stromimpulse 51, 52 dargestellt, wobei eine Ansteuerung mit dem Stromimpuls 52 die Emission des Bauteils bei gleicher Emissionsfarbe aufgrund der verringerten Impulslänge insgesamt weniger hell erscheinen lässt.

Fig. 9 zeigt eine schematische Darstellung mehrerer Impulsformen für die elektrischen Steuerimpulse im Vergleich zu einem Rechteckimpuls 53. Es sind ein Dreieckimpuls 54, ein Sägezahnimpuls 55 und ein sinoidaler Impuls 56 dargestellt. Neben einer Variation der Impulshöhe und der Impulslänge kann die Form der Steuerimpulse variiert werden, wodurch sowohl die Spannung als auch der fließende Strom sich während eines Steuerimpulses verändern. Neben den in den Fig. 4 bis 8 dargestellten Rechteckimpulsen sind beispielsweise Dreieckimpulse, Sagezahnimpulse oder sinusförmige Impulse möglich, auch komplexere Impulsformen sind grundsätzlich realisierbar. Mittels unterschiedlicher Impulsformen lassen sich bei gleicher Impulsamplitude und gleicher Impulslänge bei gleicher resultierender Helligkeit des emittierten Lichtes unterschiedliche Farben erzeugen. Insbesondere gibt es für eine bestimmte Farbe, die erzeugt werden soll, in der Regel eine Impulsform, bei der diese Farbe mit der geringsten "Belastung" für das organische lichtemittierende Bauteil erreicht wird, also beispielsweise bei der niedrigsten Impulshöhe. Die Auswahl einer solchen Impulsform hilft die Lebensdauer des Bauteils zu erhöhen.

Die unterschiedlichen Impulsformen können sowohl für spannungs- als auch für stromgeregelte Ansteuerunesformen realisiert werden, jedoch gibt es hinsichtlich der mittels des impulses erzielten Helligkeit Unterschiede zwischen Strom- und Spannungsimpulsen. Während eine OLED bereits bei einem geringen Stromfluss Licht emittiert und somit unter der Annahme einer konstanten Stromeffizienz des Bauteils, welche bei OLEDs in vielen Fällen näherungsweise gilt, dann die Helligkeit proportional zur Fläche unter der Impulsfunktion ist, ist im Falle von spannungsgetriebenen Bauteilen diese Annahme nicht möglich, da OLEDs erst ab einer Schwellspannung, welche für individuelle OLED-Strukturen unterschiedlich ist, Licht emittiert.

Im Folgenden wird ein bevorzugtes Ausfühzungsbeispiel für ein organisches lichtemittierendes Bauteil angegeben, für das eine Kompensation der differentiellen Alterung durchgeführt wurde. Es handelt sich hierbei um eine OLED mit einer Emitterschichtstruktur, welche zwei unterschiedliche Emittermaterialien umfasst, nämlich eine blaue und orange-rote Emissionsschicht. Es können in anderen Ausführungsformen auch drei oder mehr Emitterschichten unterschiedlicher Farbe vorgesehen sein. Auch OLEDs mit mehreren Emittermaterialien innerhalb einer Schicht können vorgesehen sein.

In dem Ausführungsbeispiel weist die OLED die folgende Schichtstruktur auf:
1) Anode: Indium-Zinn-Oxid (TTO)
2) p-dotierte Lochtransportschicht: 80nm MeO-TPD dotiert mit 4 Masse-% F4-TCNQ
3) löcherseitige Zwischenschicht: 10nm Spiro-TAD
4) orange-rote Emissionsschicht: 10nm Spiro-TAD dotiert mit 15 Massen-% Iridium (III) Tris(1-phenylisoquinoline)
5) blaue Emitterschicht: 15nm 4,4'-bis(9-carbazolyl)-biphenyl dotiert mit 6 Massen-% Iridium (III) bis(2-(4,6-diflwophenyl)pyridinato-N,C2")picolinate
6) elektronenseitige Zwischenschicht:1 0nm Bathophenanthrolin
7) n-dotierte Elektronentransportschicht: 30nm Bathophenanthrolin dotiert mit Cs (molekulares Verhältnis von 1:1)
8) Kathode: 100mn Aluminium

Diese OLED zeigt bei einer Versorgungsspannung von 5V eine Emission im Weißlichtbereich des CIE-Diagramms mit den CIE Farbkoordinaten x = 0,26 / y= 0,34 bei einer Helligkeit von 530 cd/m².

Diese OLED wurde nun zum Zwecke der beschleunigten Alterung für zunächst 70 Minuten mit einer Stromdichte von 31,5mA/cm² betrieben, anschließend nochmals für 30 Minuten bei einer Stromdichte von 63mA/cm². Durch dieses Betriebssehema wird eine beschleunigte Alterung des Bauelementes induziert, da die verwendete Stromdichte deutlich höher gewählt wird, als dies im normalen Betrieb der Fall ist.

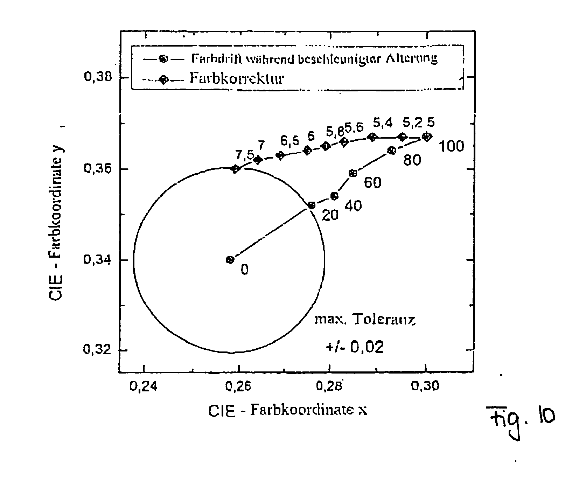

Während des beschleunigten Altems der OLED wurde in regelmäßigen Abständen die Farbkoordinate der Emission bei der ursprünglichen Betriebsspannung von 5V bestimmt (vgl. Fig. 10). Es ergibt sich, dass die Farbkoordinaten der Emission vom ursprünglichen Startpunkt im CIE-Farbdiagramm weg wandern, wobei die Emission in Richtung des gelb-orangen Bereichs verschoben wird. Bereits nach 20 Minuten Alterung liegt die Emission des Bauteils jenseits der maximalen erlaubten Toleranz, welche mit +/- 0,02 Koordinatenpunkten der Farbkoordinate im CIE-Diagramm angesetzt wurde. Zum Abschluss der Alterungsphase liegt die Emission der OLED bei einer Versorgungsspannung von 5V bei x = 0,30 / y = 0,37 und somit um mehr als 0,04 Koordinatenpunkte vom ursprünglichen Emissionsort entfernt.

Mittels einer geeigneten Wahl der Versorgungsspannung kann die Emission des Bauteils nun nach Beendigung der Alterungszeit von 100 Minuten jedoch wieder in Richtung der Farbkoordinate verschoben werden. Bei einer Versorgungsspannung von 7,5V wird eine Emission bei x = 0,26 / y = 0,36 beobachtet, welche nun wieder innerhalb der angesetzten Toleranzgrenze liegt. Die beobachtete Helligkeit des Bauteils liegt hierbei bei 1150cd/m² und ist somit etwas mehr als doppelt so groß wie die ursprüngliche Helligkeit bei 5V. Bei einer ursprünglichen Helligkeit von 530cd/m² bei einer Versorgungsspannung von 5V wird nun im gepulsten Betrieb mit einer Impulshöhe von 7,5V eine Impulslänge benötigt, die 46% der ursprünglichen Impulslänge beträgt. Eine entsprechende Verkürzung der Impulslänge führte dazu, dass der ursprüngliche Helligkeitswert wieder erreicht wurde.

Die in der vorstehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Betreiben eines organischen lichtemittierenden Bauteils (1), insbesondere organische lichtemittierende Diode (OLED), mit einer organischen Schicht (1c), welche mehrere unterschiedliche Emittermaterialien umfasst, die Licht unterschiedlicher Farben emittieren, so daß von der organischen Schicht (1c) Licht mit einer Mischfarbe emittiert wird, und einer Elektrodenanordnung (1a, 1b) zum Anlegen von elektrischen Steuerimpulsen an die organische Schicht (1c), wobei das Verfahren die folgenden Schritte aufweist:
- Betreiben des organischen lichtemittierenden Bauteils (1) mit Hilfe der elektrischen Steuerimpulse in einer gepulsten Betriebsart mit einer Betriebsfrequenz von wenigstens etwa 25Hz;
- zumindest teilweises Kompensieren einer alterungsbedingt variierenden Farbänderung des von der organischen Schicht (1c) emittierten Lichtes mit der Mischfarbe im Verlauf des gepulsten Betriebes, indem mindestens ein Betriebsparameter erfaßt wird, der den laufenden gepulsten Betrieb des organischen lichtemittierenden Bauteils (1) charakterisiert und für den eine Abhängigkeitsbeziehung zu der alterungsbedingt variierenden Farbänderung zumindest näherungsweise bekannt ist, und indem eine Impulshöhe der elektrischen Steuerimpulse dem mindestens einen erfassten Betriebsparameter und der zumindest näherungsweise bekannten Abhängigkeitsbeziehung zwischen dem mindestens einen Betriebsparameter und der alterungsbedingt variierenden Farbänderung entsprechend eingestellt wird; und
- Regeln einer vorgegebenen Helligkeit des von der organischen Schicht (1c) emittierten Lichtes mit der Mischfarbe im Verlauf des gepulsten Betriebes, indem eine Impulslänge der elektrischen Steuerimpulse eingestellt wird, um die vorgegebene Helligkeit des von der organischen Schicht (1c) emittierten Lichtes mit der Mischfarbe zu regeln.

2. Verfahren nach Anspruch 1, **dadurch gekennzeichnet, dass** die Impulslänge der elektrischen Steuerimpulse eingestellt wird, um einer Helligkeitsänderung entgegenzuwirken, welche durch das Einstellen der Impulshöhe der elektrischen Steuerimpulse beim zumindest teilweisen Kompensieren der alterungsbedingt variierenden Farbänderung verursacht wird.

3. Verfahren nach Anspruch 1 oder 2, **dadurch gekennzeichnet, dass** sich das von den mehreren unterschiedlichen Emittermaterialien in der organischen Schicht (1c) emittierte Licht unterschiedlicher Farbe zu Weißlicht mischt.

4. Verfahren nach einem der vorangehenden Ansprüche, **dadurch gekennzeichnet, dass** das von der organischen Schicht (1c) emittierte Licht mit der Mischfarbe mittels der zumindest teilweisen Kompensation der alterungsbedingt variierenden Farbänderung innerhalb eines vorgegebenen Farbbereiches des CIE-Diagramms gehalten wird.

5. Verfahren nach einem der vorangehenden Ansprüche, **dadurch gekennzeichnet, dass** als der mindestens eine Betriebsparameter ein CIE-Wert des im gepulsten Betrieb von der organischen Schicht (1c) emittierten Lichtes mit der Mischfarbe erfaßt wird.

6. Verfahren nach einem der vorangehenden Ansprüche, **dadurch gekennzeichnet, dass** als der mindestens eine Betriebsparameter ein Zeitwert für eine Betriebsdauer des gepulsten Betriebes erfaßt wird.

7. Verfahren nach einem der vorangehenden Ansprüche, **dadurch gekennzeichnet, dass** die elektrischen Steuerimpulse als Rechteck-, Dreieck-, Sägezahn- oder Sinusimpulse oder eine Kombination hiervon ausgebildet werden.

8. Verfahren nach einem der vorangehenden Ansprüche, **dadurch gekennzeichnet, dass** die elektrischen Steuerimpulse als stromgeregelte oder spannungsgeregelte Steuerimpulse angelegt werden.

9. Organisches lichtemittierendes Bauteil (1), insbesondere organische lichtemittierende Diode (OLED), mit:
- einer organischen Schicht (1c) mit mehreren unterschiedlichen Emittermaterialien, die Licht unterschiedlicher Farben emittieren, so daß Licht mit einer Mischfarbe von der organischen Schicht (1c) emittiert wird;
- einer Elektrodenanordnung (1a, 1b), die mit der organische Schicht (1c) elektrisch verbunden ist, um die organische Schicht (1c) mit elektrischer Energie zu beaufschlagen;
- einer Ansteuerschaltung (3), die mit der Elektrodenanordnung (1a, 1b) verbunden ist, um elektrische Steuerimpulse mit einer Betriebsfrequenz von wenigstens etwa 25Hz anzulegen;
- einer an die Ansteuerschaltung (3) gekoppelten Regeleinrichtung (6), mit der eine Impulshöhe der elektrischen Steuerimpulse einstellbar ist, um eine vorgegebene Mischfarbe des von der organischen Schicht (1c) emittierten Lichtes zu regeln; und
- einer an die Ansteuerschaltung (3) gekoppelten weiteren Regeleinrichtung (7), mit der eine Impulslänge der elektrischen Steuerimpulse einstellbar ist, um eine vorgegebene Helligkeit des von der organischen Schicht (1c) emittierten Lichtes mit der Mischfarbe zu regeln.

10. Organisches lichtemittierendes Bauteil nach Anspruch 9, **dadurch gekennzeichnet, daß** die Regeleinrichtung (6) und die weitere Regeleinrichtung (7) jeweils ein manuelles Bedienelement (6a; 7a) aufweisen, mit denen die Impulshöhe und die Impulslänge einstellbar sind.

11. Organisches lichtemittierendes Bauteil nach Anspruch 9 oder 10, **gekennzeichnet durch** eine Kompensationseinrichtung (4) mit Erfassungsmitteln (5) zum Erfassen mindestens eines Betriebsparameters, der den laufenden gepulsten Betrieb des organischen lichtemittierenden Bauteils (1) charakterisiert und für den eine Abhängigkeitsbeziehung zu einer alterungsbedingt variierenden Farbänderung zumindest näherungsweise bekannt ist, und einer an die Regeleinrichtung (6) und wahlweise an die weitere Regeleinrichtung (7) gekoppelte Steuereinrichtung (8), mit der die Impulshöhe der elektrischen Steuerimpulse dem mindestens einen erfassten Betriebsparameter und der zumindest näherungsweise bekannten Abhängigkeitsbeziehung zwischen dem mindestens einen Betriebsparameter und der alterungsbedingt variierenden Farbänderung entsprechend einstellbar ist.

12. Organisches lichtemittierendes Bauteil nach Anspruch 11, **dadurch gekennzeichnet, dass** die Ansteuerschaltung (3) und / oder die Regeleinrichtung (6) und / oder die weitere Regeleinrichtung (7) und / oder die Kompensationseinrichtung (4) in einer gemeinsamen Schaltung ausgeführt sind.

13. Organisches lichtemittierendes Bauteil nach Anspruch 11 oder 12, **dadurch gekennzeichnet, dass** die Erfassungsmittel (5) eine optische Messeinrichtung zum Messen von optischen Eigenschaften des von der organischen Schicht (1c) emittierten Lichtes mit der Mischfarbe aufweisen.

14. Organisches lichtemittierendes Bauteil nach einem Ansprüche 11 bis 13, **dadurch gekennzeichnet, dass** die Erfassungsmittel (5) eine Zeitmesseinrichtung aufweist zum Messen einer Betriebsdauer.

15. Organisches lichtemittierendes Bauteil nach einem Ansprüche 9 bis 14, **dadurch gekennzeichnet, dass** die organische Schicht (1c) mit den mehreren unterschiedlichen Emittermaterialien Weißlicht emittierend gebildet ist.

16. Organisches lichtemittierendes Bauteil nach einem Ansprüche 9 bis 15, **dadurch gekennzeichnet, dass** die organische Schicht (1c) mehrschichtig ist und die mehreren unterschiedlichen Emittermaterialien über mehrere Schichten verteilt sind.

## Claims

1. A method for operating an organic light emitting component (1), in particular organic light emitting diode (OLED), with an organic layer (1c) comprising a plurality of different emitter materials, which emit light of different colours, so that light of a mixed colour is emitted from the organic layer (1c), and an electrode arrangement (1a, 1b) for applying electric control pulses to the organic layer (1c), the method having the following steps:
- operating the organic light emitting component (1) with the help of the electric control pulses in a pulsed operating mode with an operating frequency of at least about 25 Hz;
- at least partially compensating an ageing induced varying colour change of the mixed colour light emitted from the organic layer (1c) during the course of the pulsed operation by recording at least one operating parameter that characterizes the running pulsed operation of the organic light emitting component (1) and for which a dependence relationship to the ageing induced varying colour change is known at least approximately, and by adjusting a pulse height of the electric control pulses according to the at least one recorded operating parameter and the at least approximately known dependence relationship between the at least one operating parameter and the ageing induced varying colour change; and
- regulating a predetermined luminance of the mixed colour light emitted from the organic layer (1c) during the course of the pulsed operation by adjusting a pulse length of the electric control pulses to regulate the predetermined luminance of the mixed colour light emitted from the organic layer (1c).

2. Method according to claim 1, **characterized in that** the pulse length of the electric control pulses is adjusted to counteract a luminance change caused by the adjustment of the pulse height of the electric control pulses during the at least partial compensation of the ageing induced varying colour change.

3. Method according to claim 1 or 2, **characterized in that** the light of different colour emitted from the plurality of different emitter materials in the organic layer (1c) is mixed to white light.

4. Method according to any one of the preceding claims, **characterized in that** the mixed colour light emitted from the organic layer (1c) is maintained within a predetermined colour region of the CIE diagram by means of the at least partial compensation of the ageing induced varying colour change.

5. Method according to any one of the preceding claims, **characterized in that** a CIE value of the mixed colour light emitted from the organic layer (1c) during pulsed operation is recorded as the at least one operating parameter.

6. Method according to any one of the preceding claims, **characterized in that** a time value for an operating duration of the pulsed operation is recorded as the at least one operating parameter.

7. Method according to any one of the preceding claims, **characterized in that** the electric control pulses are realised as rectangular, triangular, sawtooth or sinusoidal pulses or a combination thereof.

8. Method according to any one of the preceding claims, **characterized in that** the electric control pulses are applied as current regulated or voltage regulated control pulses.

9. An organic light emitting component (1), in particular organic light emitting diode (OLED), comprising:
- an organic layer (1c) comprising a plurality of different emitter materials emitting light of different colours so that mixed colour light is emitted from the organic layer (1c);
- an electrode arrangement (1a, 1b) electrically connected to the organic layer (1c) for supplying the organic layer with electric energy;
- a control circuit (3) connected to the electrode arrangement (1a, 1b) for applying electric control pulses with an operating frequency of at least about 25 Hz;
- a regulating device (6) coupled to the control circuit (3), with which a pulse height of the electric control pulses is adjustable for regulating a predetermined mixed colour of the light emitted by the organic layer (1c); and
- a further regulating device (7) coupled to the control circuit (3), with which a pulse length of the electric control pulses is adjustable for regulating a predetermined luminance of the mixed colour light emitted by the organic layer (1c).

10. Organic light emitting component according to claim 9, **characterized in that** the regulating device (6) and the further regulating device (7) are each provided with one manual operating element (6a, 7a) with which the pulse height and pulse length are adjustable.

11. Organic light emitting component according to claim 9 or 10, **characterized by** a compensation device (4) comprising recording means (5) for recording at least one operating parameter characterizing the running pulsed operation of the organic light emitting component (1) and for which a dependence relationship to an ageing induced varying colour change is known at least approximately, and by a controlling device (8) coupled to the regulating device (6) and optionally to the further regulating device (7), with which the pulse height of the electric control pulses is adjustable according to the at least one recorded operating parameter and the at least approximately known dependence relationship between the at least one operating parameter and the ageing induced varying colour change.

12. Organic light emitting component according to claim 11, **characterized in that** the control circuit (3) and / or the regulating device (6) and / or the further regulating device (7) and / or the compensation device (4) are arranged in a common circuit.

13. Organic light emitting component according to claim 11 or 12, **characterized in that** the recording means (5) comprise an optical measuring device for measuring optical properties of the mixed colour light emitted from the organic layer (1c).

14. Organic light emitting component according to one of the claims 11 to 13, **characterized in that** the recording means (5) has a time measuring device for measuring an operating duration.

15. Organic light emitting component according to one of the claims 9 to 14, **characterized in that** the organic layer (1c) is realized with a plurality of different emitter materials so as to emit white light.

16. Organic light emitting component according to one of the claims 9 to 15, **characterized in that** the organic layer (1c) comprises a plurality of layers and the serveral different emitter materials are distributed over serveral layers.

## Revendications

1. Procédé pour l'exploitation d'un composant organique électroluminescent (1), en particulier une diode électroluminescent organique (OLED), avec une couche organique (1c) qui comprend plusieurs matériaux émetteurs différents qui émettent de la lumière de différentes couleurs de manière à ce que de la lumière avec une couleur mixte soit émise de la couche organique (1c), et un montage d'électrodes (1a, 1b) pour l'application d'impulsions de commande électriques à la couche organique (1c), étant donné que le procédé présente les étapes suivantes :
- exploitation du composant électroluminescent organique (1) à l'aide des impulsions de commande électriques dans un mode de fonctionnement pulsé avec une fréquence de service d'au moins environ 25 Hz ;
- compensation au moins partielle d'un changement de couleur, variable en fonction du vieillissement, de la lumière émise par la couche organique (1c) avec la couleur mixte au cours du fonctionnement pulsé, étant donné qu'au moins un paramètre de service qui caractérise le fonctionnement pulsé en cours du composant luminescent organique (1) et pour lequel une relation de dépendance avec le changement de couleur variable en fonction du vieillissement est saisi, et étant donné qu'une hauteur d'impulsion des impulsions de commande électriques est réglée de manière conforme à ou aux paramètres de service saisis et à la relation de dépendance au moins approximativement connue entre le ou les paramètres de service et le changement de couleur variable en fonction du vieillissement ; et
- régulation d'une luminance prédéfinie de la lumière émise par la couche organique (1c) avec la couleur mixte au cours du fonctionnement pulsé, étant donné qu'une longueur d'impulsion des impulsions de commande électriques est réglée pour réguler la luminance prédéfinie de la lumière émise par la couche organique (1c) avec la couleur mixte.

2. Procédé selon la revendication 1, **caractérisé en ce que** la longueur d'impulsion des impulsions de commande électriques est réglée de manière à être antagoniste à une variation de luminance qui est causée par le réglage de la hauteur d'impulsion des impulsions de commande électriques lors de la compensation au moins partielle du changement de couleur variable en fonction du vieillissement.

3. Procédé selon la revendication 1 ou 2, **caractérisé en ce que** la lumière de couleurs différentes émise dans la couche organique (1c) par les différents matériaux émetteurs se mélange pour former une lumière blanche.

4. Procédé selon l'une quelconque des revendications précédentes, **caractérisé en ce que** la lumière émise par la couche organique (1c) avec la couleur mixte est maintenue au moyen de la compensation au moins partielle du changement de couleur variable en fonction du vieillissement au sein d'une plage de couleurs prédéfinies du diagramme CIE.

5. Procédé selon l'une quelconque des revendications précédentes, **caractérisé en ce qu'**une valeur CIE de la lumière émise par la couche organique (1c) avec la lumière mixte en mode de fonctionnement pulsé est saisie comme le ou les paramètres de service.

6. Procédé selon l'une quelconque des revendications précédentes, **caractérisé** e n c e qu'une valeur actuelle pour une durée de fonctionnement en mode pulsé est saisie comme le ou les paramètres de service.

7. Procédé selon l'une quelconque des revendications précédentes, **caractérisé en ce que** les impulsions de commande électriques sont formées comme impulsions rectangulaires, triangulaires, en dents de scie ou sinusoïdales ou une combinaison de ces dernières.

8. Procédé selon l'une quelconque des revendications précédentes, **caractérisé en ce que** les impulsions de commande électriques sont appliquées comme impulsions de commande à régulation d'intensité ou à régulation de tension.

9. Composant électroluminescent organique (1), en particulier diode électroluminescente organique (OLED), avec :
- une couche organique (1c) avec plusieurs matériaux émetteurs différents qui émettent de la lumière de couleurs différentes de manière à ce que de la lumière avec une couleur mixte soit émise par la couche organique (1c);
- un montage d'électrodes (1a, 1b) qui est relié électriquement à la couche organique (1c) de manière à appliquer de l'énergie électrique à la couche organique (1c) ;
- un circuit d'excitation (3) qui est relié au montage d'électrodes (1a, 1b) de manière à appliquer des impulsions de commande électriques avec une fréquence de service d'au moins environ 25 Hz ;
- un système de réglage (6) couplé au circuit d'excitation (3), système qui permet de régler une hauteur d'impulsion des impulsions de commande électriques de manière à régler une couleur mixte prédéfinie de la lumière émise par la couche organique (1c) ; et
- un autre système de réglage (7) couplé au circuit d'excitation (3), système qui permet de régler une longueur d'impulsion des impulsions de commande électriques de manière à régler une luminance prédéfinie de la lumière émise par la couche organique (1c) avec la couleur mixte.

10. Composant électroluminescent organique selon la revendication 9, **caractérisé en ce que** le système de réglage (6) et l'autre système de réglage (7) présentent chacun un élément de commande manuel (6a ; 7a) qui permet de régler la hauteur d'impulsion et la longueur d'impulsion.

11. Composant électroluminescent organique selon la revendication 9 ou 10, **caractérisé par** un système de compensation (4) avec des moyens de saisie (5) pour la saisie d'au moins un paramètre de service qui caractérise le fonctionnement pulsé en cours du composant électroluminescent organique (1) et pour lequel une relation de dépendance avec le changement de couleur variable en fonction du vieillissement est au moins approximativement connue, et un équipement de commande (8) couplé au système de réglage (6) ainsi que, au choix, à l'autre système de réglage (7), équipement qui permet de régler la hauteur d'impulsion des impulsions de commande électriques de manière conforme à ou aux paramètres de service saisis et à la relation de dépendance au moins approximativement connue entre le ou les paramètres de service et le changement de couleur variable en fonction du vieillissement.

12. Composant électroluminescent organique selon la revendication 11, **caractérisé en ce que** le circuit d'excitation (3) et/ou le système de réglage (6) et/ou l'autre système de réglage (7) et/ou le système de compensation (4) sont réalisés dans un circuit commun.

13. Composant électroluminescent organique selon la revendication 11 ou 12, **caractérisé en ce que** les moyens de saisie (5) présentent un équipement de mesure pour la mesure de propriétés optiques de la lumière émise par la couche organique (1c) avec la lumière mixte.

14. Composant électroluminescent organique selon l'une quelconque des revendications 11 à 13, **caractérisé en ce** e que les moyens de saisie (5) présentent un équipement de mesure du temps pour la mesure d'une durée de fonctionnement.

15. Composant électroluminescent organique selon l'une quelconque des revendications 9 à 14, **caractérisé en ce que** la couche organique (1c) avec les différents matériaux émetteurs est formée de manière à émettre de la lumière blanche.

16. Composant électroluminescent organique selon l'une quelconque des revendications 9 à 15, **caractérisé en ce que** la couche organique (1c) comporte plusieurs couches et les différents matériaux émetteurs sont répartis sur plusieurs couches.
